# EUROPEAN PATENT APPLICATION

(11) **EP 3 267 239 A1**
(43) Date of publication of application: **10.01.2018**
(21) Application number: 17179953.9
(22) Date of filing: 06.07.2017
(51) Int. Cl.: G02C 13/00

(54) **A METHOD OF DETERMINING A VERTICAL OFFSET BETWEEN SPECTACLES WORN BY A USER AND PUPILS OF SAID USER WEARING SAID SPECTACLES AS WELL AS A CORRESPONDING SYSTEM**

(30) Priority: 06.07.2016 NL 2017116
(71) Applicant: Intersafe Holding B.V., 3311 JX Dordrecht (NL)
(72) Inventor: BREEDVELD, Edward Johan, 3311 JX DORDRECHT (NL); PETIN, Yves Alexandre, 3311 JX DORDRECHT (NL); PIETERMAN, Jan Joost, 3311 JX DORDRECHT (NL)
(74) Representative: Algemeen Octrooi- en Merkenbureau B.V.

(57) **Abstract**

A method of determining a vertical offset between spectacles worn by a user and pupils of said user wearing said spectacles, said method comprising the steps of providing an image of said user wearing said spectacles, detecting, in said provided image, at least two predetermined markers provided on said spectacles, determining, in said provided image, positions of said detected at least two markers on said spectacles, detecting, in said provided image, a left pupil and a right pupil of said user wearing said spectacles, determining, in said provided image, positions of said detected left pupil and said right pupil, determining a vertical offset between said spectacles worn by said user and said pupils of said user based on said positions of said detected at least two markers on said spectacles and said positions of said detected left pupil and said right pupil.

## Description

The present invention is related to a method of determining a vertical offset between spectacles worn by a user and pupils of said user wearing said spectacles.

In case of prescription spectacles, it is known that the optical center of the lenses of the spectacle should optimally be aligned with the position of the eyes of the user, more specifically the pupils of the user. The position of the pupils in relation to the spectacles is, or may be, different per frame in combination with the facial characteristics of the user wearing the spectacles. The is, every frame fits differently per user and measurement of the pupil position is to be performed per frame.

Currently, an eye care professional measures a pupil height manually for the process of producing prescription correctional spectacles, i.e. eyeglasses. Such a measurement is performed with the use of a ruler and a prepared fitting pair of spectacles. As such, the eye care professional is able to measure the height of the pupils to the bottom side of the frame of the spectacles using the ruler.

One of the downsides of the above described method is that is it labour intensive. Further, the process is vulnerable for human errors and measurement inaccuracies.

It is therefor an object of the present invention to overcome the above states problems.

In a first aspect, the invention provides for a method of determining a vertical offset between spectacles worn by a user and pupils of said user wearing said spectacles, said method comprising the steps of:
- providing an image of said user wearing said spectacles, wherein at least three markers are provided on a right frame part of said spectacles, and at least three other markers are provided on a left frame part of said spectacles, wherein said at least three markers and said at least three other markers bound expected areas for searching said right pupil and said left pupil, correspondingly;
- detecting, in said provided image, said at least three markers and said at least three other markers provided on said spectacles;
- determining, in said provided image, positions of said three markers and said at least three other markers on said spectacles;
- determining, in said provided image, said expected areas based on said positions of said three markers and said at least three other markers on said spectacles;
- detecting, in said provided image, within said expected areas, a left pupil and a right pupil of said user wearing said spectacles;
- determining, in said provided image, positions of said detected left pupil and said right pupil;
- determining a vertical offset between said spectacles worn by said user and said pupils of said user based on said positions of said detected at least three markers and said at least three other markers on said spectacles and said positions of said detected left pupil and said right pupil.

It was the insight of the inventors that the presented method provides for better, more accurate results. That is, the vertical offset between the pupils and the spectacles is established more accurately. Further, the presented method is powerful, and simple, to perform, such that the method is not labour intensive for an eye care professional.

In order to enable the method, the inventors have found that the spectacles should be incorporated with at least two markers in order to determine a corresponding position of the spectacles. That is, using at least two markers the position of the spectacles, when worn by the user, can be efficiently determined.

The presented method thus allows for an easy, user-friendly way of obtaining the required vertical offset for a frame of spectacles which, together with for example optical measurement information like lens power, cylindrical power, reading addition, prism power and/or other optical values, will enable the creation of complete order information needed for the production of a pair of correctional spectacles.

The vertical offset is typically related to the pupil height in relation to the bottom side of the lenses in the spectacles. However, the vertical offset may also be related to the top side of the lenses in the spectacles or any other known reference point available.

According to the present invention the at least two predetermined markers may be provided on the lens itself or on the frame of the spectacles. As long as their positions, and their relative positions with respect to each other, are known beforehand.

Using the positions of the at least two markers, the position and orientation in a three dimensional space of the spectacles can be calculated in relation to the pupils of the user wearing the spectacles.

In order to facilitate the presented method, the spectacles worn by the user may be provided with optically neutral lenses, i.e. dummy lenses. The at least two markers may then be provided on any of the dummy lenses or on the frame of the spectacles.

As mentioned above, the presented method requires at least two markers for efficiently determining the position of the spectacles worn by the user. In such a case, the markers should have a visual representation, i.e. visual surface, of which the size and dimensions are known beforehand. For example, in case the markers are equivalent to perfect circles, the three-dimensional position of the spectacles may be determined using the determine oval shape of the markers. That is, in case the determined circle in the provided image represents a perfect circle, it is assumed that the image is taken perpendicular to the face of the user, i.e. perpendicular to the spectacles. In case the determined circle in the provided image represents an oval shape, for example a longitudinal extended circle, the horizontal tilting of the spectacles may be determined.

One of the advantages of the presented method is that the pupils of the user may be found quickly, as the inventors have found that the algorithm to do so would not need to search for the pupils in the whole image, i.e. the whole area of the image. As such, a step of determining the expected areas is included to limit the algorithm for searching for the pupils to those expected areas. This saves valuable time. Another advantage of the presented method is that it is possible to more accurately search for the pupils of the user, since the algorithm searches for the pupils of user in the expected areas, and not the whole image. Therefore, the algorithm is less likely to find something which should not be identified as a pupil of the user. As such, the proposed method reduces the amount of false positives.

In an example, the method further comprises the step of:
- determining a horizontal offset between said spectacles worn by said user and said pupils of said user based on said positions of said detected at least two markers on said spectacles and said positions of said detected left pupil and said right pupil.

This present example allows for an easy, user-friendly way of obtaining horizontal offset values for a frame of spectacles which will enable the creation of a complete order needed for the production of a pair of correctional spectacles. As such, in this example, not only the vertical offset is obtained but also the horizontal offset.

In a detailed example, the vertical offset is determined for each of said pupils separately and/or wherein said horizontal offset is determined for each of said pupils separately.

The described horizontal offset and vertical offset may be expressed, and calculated, for both pupils but may also be expressed, and calculated, for each pupil separately.

In an example, the step of providing an image of the user wearing the spectacles comprises capturing said image using a User Equipment, UE.

In another example, said spectacles comprises six markers, wherein each of said six markers has a same visual representation, wherein said step of determining said positions of said six markers on said spectacles comprises determining a scale and a three-dimension orientation of said six markers.

The present disclosure may use the three-dimension orientation of the spectacles to correctly calculate the vertical offset of the pupils with respect to the frame of the spectacles. The three-dimension orientation is then not defined as the orientation of the spectacles with respect to the pupils itself. The three-dimension orientation is the orientation of the spectacles considered in a free dimension.

It was the insight that the position of the spectacles can be determined most efficiently in case the spectacles comprise six markers. In such a case, it is sufficient to compare the determined distances between the six markers and the predetermined distances of the six markers to determine the position of the spectacles. That is, using the relative positions of the markers with respect to each other, the three-dimensional orientation and the scale of the spectacles can be determined. In such a case, it is not required to use the actual shape and size of each of the markers to determine the position of the spectacles.

In an example, the at least two markers are provided on a frame of said spectacles and/or on lenses of said spectacles.

In another example, the vertical offset between said spectacles worn by said user and pupils of said user wearing said spectacles is defined as a vertical distance between a lens bottom line of said spectacles, said lens bottom line being defined as a straight line passing through a lens bottom of a left lens of said spectacles and a lens bottom of a right lens of said spectacles, and a straight center line passing through both detected pupils, wherein said vertical distance is measured in a vertical center line of a frame of said spectacles.

In another example, said spectacles further comprise a visual identification code, wherein said visual identification code is provided at a predetermined position with respect to said at least three markers and said at least three other markers, said code representing dimensions of a frame of said spectacles, wherein said method comprises the step of:
- determining, in said provided image, an expected visual identification code area based on said positions of said at least three markers and said at least three other markers;
- identifying, in said expected visual identification code area, said visual identification code.

The advantage hereof is that the method is capable to cope with a variety of spectacles, i.e. a variety of frames. Each frame is positioned differently on a user. In order to cope with different frames, the characteristics of each frame are provided in a database. Each frame is further identifiable with a visual identification code. Based on the identified visual identification code, the method is able to establish the vertical offset. The above described example is furthermore advantageous as, due to limiting the area in the image in which the visual identification code is to be searched, the total time for actually identifying the visual identification code is reduced.

In a further example, said identification code is provided in between two markers. An advantage of this example is that said identification code can be found relatively quickly.

In an example said at least six markers are green.

An advantage of this example is that said markers are relatively easily detected. The inventor found that green is a colour, that is relatively uncommon in images of users wearing said spectacles. Therefore said green colour is easily filtered out of said image.

In a second aspect, the invention provides in a system for determining a vertical offset between spectacles worn by a user and pupils of said user wearing said spectacles, said system comprising:
- providing means arranged for providing an image of said user wearing said spectacles, wherein at least three markers are provided on a right frame part of said spectacles, and at least three other markers are provided on a left frame part of said spectacles, wherein said at least three markers and said at least three other markers bound expected areas for searching said right pupil and said left pupil, correspondingly;
- marker detecting means arranged for detecting, in said provided image, said at least three markers and said at least three other markers provided on said spectacles;
- marker process means arranged for determining, in said provided image, positions of said detected at least three markers and said at least three other markers on said spectacles;
- pupil detecting means arranged for detecting, in said provided image, within said expected areas, a left pupil and a right pupil of said user wearing said spectacles;
- pupil process means arranged for determining, in said provided image, positions of said detected left pupil and said right pupil, and a
- processor arranged for determining a vertical offset between said spectacles worn by said user and said pupils of said user based on said positions of said detected at least three markers and said at least three other markers on said spectacles and said positions of said detected left pupil and said right pupil.

The expressions, i.e. the wording, of the different aspects comprised by the method and system according to the present disclosure should not be taken literally. The wording of the aspects is merely chosen to accurately express the rationale behind the actual functioning of the aspects.

In accordance with the present disclosure, different aspects applicable to the above mentioned examples of the methods, including the advantages thereof, correspond to the aspects which are applicable to the system.

In an example of the system, the providing means comprise image capturing means arranged for capturing said image.

In another example, the system comprises said spectacles, said spectacles comprises six markers, wherein each of said six markers has a same visual representation, wherein said marker process means are arranged for determining a scale and a three-dimension orientation of said six markers.

In a further example, the system comprises said spectacles, and wherein said at least two markers are provided on a frame of said spectacles and/or on lenses of said spectacles.

In an example, said vertical offset between said spectacles worn by said user and pupils of said user wearing said spectacles is defined as a vertical distance between a lens bottom line of said spectacles, said lens bottom line being defined as a straight line passing through a lens bottom of a left lens of said spectacles and a lens bottom of a right lens of said spectacles, and a straight center line passing through both detected pupils, wherein said vertical distance is measured in a vertical center line of a frame of said spectacles.

In another example, the system comprises said spectacles, wherein said spectacles further comprise a visual identification code, said code representing dimensions of a frame of said spectacles, wherein said system further comprises:
- identifying means arranged for identifying, in said provided image, said visual identification code.

In an example, the system comprises a User Equipment, UE, comprising said providing means, and wherein said system further comprising a central server comprising said marker detecting means, said marker process means, said pupil detecting means, said pupil process means and said processor, wherein said central server and said UE are arranged to communicate with each other.

In a third aspect, the invention provides in a non-transitory computer-readable storage medium, comprising instructions which, when executed on at least one processor, cause the at least one processor to carry out the method according to any of the method examples provided above.

In a fourth aspect, there is provided a digital distribution platform server for apps on a User Equipment, UE, wherein said platform comprises a non-volatile memory, being arranged for distribution of an app comprising a computer program product which comprises computer program code arranged for performing the method according to any of the method examples as provided above.

In all aspects it is possible that a total of five markers is provided on said spectacles. In this case, said spectacles are provided with at least three markers for bounding an expected area at a first frame part of said spectacles for searching a first pupil of said user, and with two markers at a second frame part. For bounding an expected area for a second pupil of said user, one marker of the at least three markers is used in combination with the two markers of the second frame part to bound an expected area for said second pupil. It is thus possible to generate an expected area for the first pupil of said user, and an expected area for the second pupil of said user by using a marker of the at least three markers of the first frame part as a reference for determining the expected area of the second frame part.

The above-mentioned and other features and advantages of the disclosure will be best understood from the following description referring to the attached drawings. In the drawings, like reference numerals denote identical parts or parts performing an identical or comparable function or operation.

### Brief description of the drawings

Figure 1 is a schematic diagram representing a flow chart of a method according to the present invention.
Figure 2 is a schematic diagram representing a flow chart of a method according to the present invention.
Figure 3 is a schematic diagram representing spectacles for use in a method according to the present invention.
Figure 4 is a schematic diagram representing a part of spectacles for use in a method according to the present invention.

### Detailed description

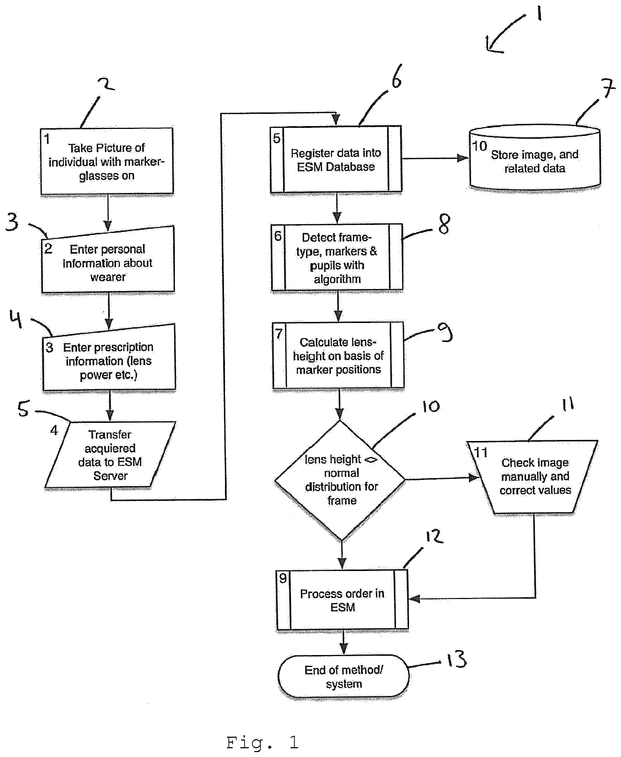

Figure 1 is a schematic diagram representing a flow chart 1 of a method according to the present invention.

Before the method starts, a user selects a preferred test spectacles. That is, the user selects a test spectacles which is to his or her liking. The test frame of the test spectacles is equipped with dummy lenses, i.e. optically neutral lenses. In the present example, six visible markers are present on the dummy lenses, more specifically, thee markers on each dummy lens.

The user then puts on the preferred test spectacles and a picture is taken 2 of the user wearing the spectacles. The picture may be taken with a User Equipment like a Mobile Phone, a tablet, or anything alike. The picture should be taken 2 in such a way that the spectacles as well as the pupils of the user are visible and recognizable.

In the steps identified with reference numeral 3 and 4, all kinds of personal information and prescription information is entered, like age, living address, gender, lens power, etc. This kind of information may be helpful during the ordering process of ordering a prescription corrective spectacles. The obtained information is then transferred 4 to a central ordering system, i.e. Employee Safety Manager, ESM. At the system side, the data is registered, i.e. stored, and maintained 6, 7 in a database.

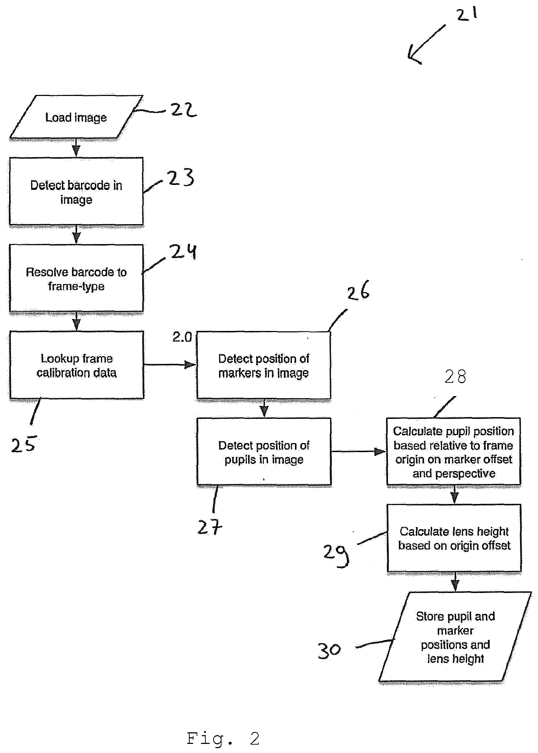

In the steps indicated with reference numerals 8 and 9, the vertical offset between the spectacles worn by the user and the pupils of the user is determined. These two steps are explained in more detail with respect to figure 2.

In the step indicated with reference numeral 10, the obtained lens height, i.e. the vertical offset, is compared with the normal distribution of the pupil height for the selected frame based on historical data. When the determined offset value is showing an unexpected difference, manual evaluation 11 of the picture and the data may be required. The information from this manual evaluation can be used to either update the normal distribution data, or correct possible errors in any of the algorithms of the method.

Finally, the method ends in the steps indicated with reference numerals 12 and 13, where the order is processed in the ESM.

Figure 2 is a schematic diagram representing a flow chart of a method 21 according to the present invention.

The method 21 is directed to determining a vertical offset between spectacles worn by a user and pupils of the user wearing the spectacles. The steps disclosed in figure 2 are a detailed implementation of the steps indicated with reference numerals 8 and 9 in figure 1.

Here, a picture is provided 22, which is picture is, for example, taken by a mobile phone.

In the present example, the spectacles are provided with a visual identification code, wherein the code represents dimensions of a frame of said spectacles. The visual identification code is, for example, a barcode or a QR code or anything alike. For example, the distances between the markers present on the spectacles and the bottom side, or top side, of the spectacles is coupled to the particular visual identification code of the spectacles. As such, the method comprises a step of identifying 23, in said provided image, said visual identification code, and resolving 24, said visual identification code to a particular frame type, and looking up 25 corresponding frame calibration data like the distances as referred to here above.

The above entails that, typically, the vertical offset between the spectacles worn by said user and pupils of said user wearing said spectacles is defined as a vertical distance between a lens bottom line of said spectacles, said lens bottom line being defined as a straight line passing through a lens bottom of a left lens of said spectacles and a lens bottom of a right lens of said spectacles, and a straight center line passing through both detected pupils, wherein said vertical distance is measured in a vertical center line of a frame of said spectacles. As an alternative to the lens bottom line of the spectacles, a lens top line of the spectacles could be used.

The method then continues with the detection 26 of the six markers and determining of the positions of the six markers in the image. Here, computer vision algorithms are used to detect said markers and to determine the positions thereof.

In a next step 27, the method comprises the steps of detecting, in said provided image, a left pupil and a right pupil of said user wearing said spectacles, and determining, in said provided image, positions of said detected left pupil and said right pupil.

It was the insight that the process of detecting the pupils can be speeded up in case the detected positions of the markers are used for predicting an expected area in the image in which it is likely that the pupils can be found. As such, the method first searches for the pupils within the expected area. This also increases the reliability of the method, as it is less likely that the method wrongfully interprets something else in the image as being the pupils of the user.

According to the present invention, an expected area is a predefined area present on the spectacles and it is bound by the markers. The predefined area may be set once, by an operator, or may be updated each time a measurement is performed.

Finally, in the steps indicated with reference numerals 28 and 29, a vertical offset offset between said spectacles worn by said user and said pupils of said user is determined based on said positions of said detected at least two markers on said spectacles and said positions of said detected left pupil and said right pupil.

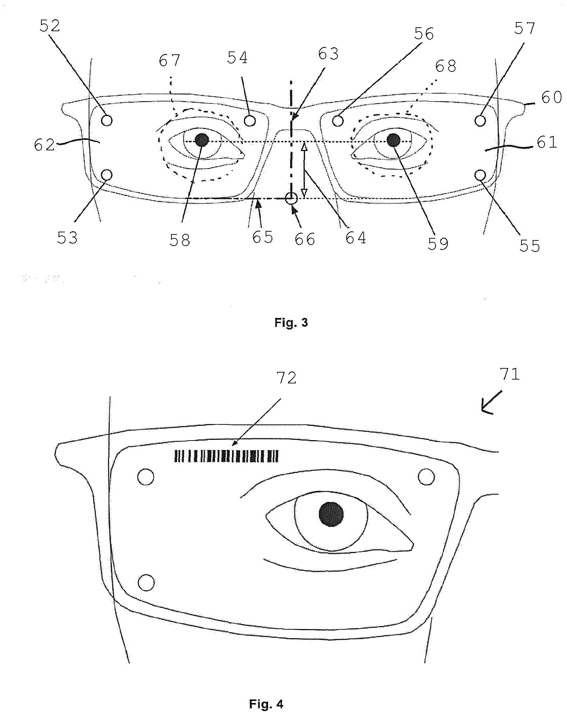

Figure 3 is a schematic diagram representing spectacles 51 for use in a method according to the present invention.

These particular spectacles 51 comprise a frame 60 and two dummy lenses 61, 62. In this example, the spectacles 51 comprise exactly six markers 52 - 57. Three markers 52 - 54 are provided on the right dummy lens 62 and three other markers 55 - 57 are provided on the left dummy lens 61. As shown, each of the three markers on a particular lens are positioned in such a way that there's a predetermined vertical distance between two of them 52, 53 as well as a predetermined horizontal distance between another two of them 52, 54. This is advantageous as in such a way the actual three-dimensional position of the spectacles can be determined much more reliably.

The six markers 52 - 57 have a same shape, i.e. shaped as a round dot. As mentioned before, the shape of the six markers 52 - 57 may be chosen in such a way that it helps in determining the actual three-dimensional position of the spectacles. It is possible that the three-dimensional position of the spectacles is determined more reliably in case the predetermined shape and the detected deformed shape of the markers is taken into account.

Once the markers have been detected and their positions have been determined, the method according to the present invention continues and intends to detect the pupils 58, 59 and determine the positions of these pupil 58, 59. As the positions of the markers 52 - 57 are known, an expected area 67, 68 in the image is established in which it is likely that the pupils 58, 59 can be found. As such, the method first starts with searching for the pupils 58, 59 in the expected area 67, 68.

The vertical offset 64 is defined as the vertical distance between a lens bottom line 65 of the spectacles, wherein the lens bottom line 65 is defined as a straight line passing through a lens bottom of a left lens 61, or a left frame part belonging to the left lens, and a lens bottom of a right lens 62, or a right frame part belonging to the right lens, and a straight center line 69 passing through both detected pupils 58, 59, wherein the vertical distance 64 is measured in a vertical center line 63 of the frame 60 of the spectacles 51.

In the case of five markers, for example, three markers 52, 53, 54 are provided for limiting an expected area 67 on a right frame part of said spectacles, and at least two other markers 55, 57 are provided on a left frame part of said spectacles. At least one of the at least three markers 52, 53, 54 is used in combination with the at least two other markers 55, 57 to bound an expected area 68 on a left frame part of said spectacles.

Figure 4 is a schematic diagram representing a part of spectacles for use in a method according to the present invention.

Here, the spectacles 71 are provided with a visual identification code 72 in the form of a bar code. In an example, the method is able to detect the barcode 72 and to couple the barcode with specific dimensions of the frame 60 of the spectacles that are being worn by the user itself. The visual identification code 72 may also be in the form of a QR code or any other type of visual code.

The present invention is not limited to the embodiments as disclosed above, and can be modified and enhanced by those skilled in the art beyond the scope of the present invention as disclosed in the appended claims without having to apply inventive skills.

## Claims

**1.** A method of determining a vertical offset between spectacles worn by a user and pupils of said user wearing said spectacles, said method comprising the steps of:
- providing an image of said user wearing said spectacles, wherein at least three markers are provided on a right frame part of said spectacles, and at least three other markers are provided on a left frame part of said spectacles, wherein said at least three markers and said at least three other markers bound expected areas for searching said right pupil and said left pupil, correspondingly;
- detecting, in said provided image, said at least three markers and said at least three other markers provided on said spectacles;- determining, in said provided image, positions of said three markers and said at least three other markers on said spectacles;
- determining, in said provided image, said expected areas based on said positions of said three markers and said at least three other markers on said spectacles;
- detecting, in said provided image, within said expected areas, a left pupil and a right pupil of said user wearing said spectacles;
- determining, in said provided image, positions of said detected left pupil and said right pupil;
- determining a vertical offset between said spectacles worn by said user and said pupils of said user based on said positions of said detected at least three markers and said at least three other markers on said spectacles and said positions of said detected left pupil and said right pupil.

**2.** A method according to claim 1, wherein said method further comprises the step of:
- determining a horizontal offset between said spectacles worn by said user and said pupils of said user based on said positions of said detected at least two markers on said spectacles and said positions of said detected left pupil and said right pupil.

**3.** A method according to any of the claims 1 and 2, wherein said vertical offset is determined for each of said pupils separately and/or wherein said horizontal offset is determined for each of said pupils separately.

**4.** A method according to any of the previous claims, wherein said step of providing said image comprises capturing said image using a mobile device.

**5.** A method according to any of the previous claims, wherein said spectacles comprises six markers, wherein each of said six markers has a same visual representation, wherein said step of determining said positions of said six markers on said spectacles comprises determining a scale and a three-dimensional orientation of said six markers.

**6.** A method according to any of the previous claims, wherein said at least two markers are provided on a frame of said spectacles and/or on lenses of said spectacles.

**7.** A method according to any of the previous claims, wherein said vertical offset between said spectacles worn by said user and pupils of said user wearing said spectacles is defined as a vertical distance between a lens bottom line of said spectacles, said lens bottom line being defined as a straight line passing through a lens bottom of a left lens of said spectacles and a lens bottom of a right lens of said spectacles, and a straight center line passing through both detected pupils, wherein said vertical distance is measured in a vertical center line of a frame of said spectacles.

**8.** A method according to any of the previous claims in combination with claim 2, wherein said horizontal offset between said spectacles worn by said user and pupils of said user wearing said spectacles is defined as a horizontal distance between a vertical middle line of said spectacles, said vertical middle line being defined as a straight vertical line though a vertical center axis of said frame of said spectacles, and any of said pupils.

**9.** A method according to any of the previous claims, wherein said spectacles further comprise a visual identification code, wherein said visual identification code is provided at a predetermined position with respect to said at least three markers and said at least three other markers, said code representing dimensions of a frame of said spectacles, wherein said method comprises the step of:
- determining, in said provided image, an expected visual identification code area based on said positions of said at least three markers and said at least three other markers;
- identifying, in said expected visual identification code area, said visual identification code.10. A method according to any of the previous claims, wherein said visual identification code is green.

**11.** A system for determining a vertical offset between spectacles worn by a user and pupils of said user wearing said spectacles, said system comprising:
- providing means arranged for providing an image of said user wearing said spectacles, wherein at least three markers are provided on a right frame part of said spectacles, and at least three other markers are provided on a left frame part of said spectacles, wherein said at least three markers and said at least three other markers bound expected areas for searching said right pupil and said left pupil, correspondingly;
- marker detecting means arranged for detecting, in said provided image, said at least three markers and said at least three other markers provided on said spectacles;
- marker process means arranged for determining, in said provided image, positions of said detected at least three markers and said at least three other markers on said spectacles;
- pupil detecting means arranged for detecting, in said provided image, within said expected areas, a left pupil and a right pupil of said user wearing said spectacles;
- pupil process means arranged for determining, in said provided image, positions of said detected left pupil and said right pupil, and a
- processor arranged for determining a vertical offset between said spectacles worn by said user and said pupils of said user based on said positions of said detected at least three markers and said at least three other markers on said spectacles and said positions of said detected left pupil and said right pupil.12.
System according to any of the claims 11, wherein said system comprises said spectacles, wherein said spectacles further comprise a visual identification code, wherein said visual identification code is provided at a predetermined position with respect to said at least three markers and said at least three other markers, said code representing dimensions of a frame of said spectacles, wherein said system further comprises:
- processor means arranged for determining, in said provided image, an expected visual identification code area based on said positions of said at least three markers and said at least three other markers;
- identifying means arranged for identifying, in said expected visual identification code area, said visual identification code.

**13.** System according to any of the claims 11 - 12, wherein said system comprises a User Equipment, UE, comprising said providing means, and wherein said system further comprising a central server comprising said marker detecting means, said marker process means, said pupil detecting means, said pupil process means and said processor, wherein said central server and said UE are arranged to communicate with each other.

**14.** A non-transitory computer-readable storage medium, comprising instructions which, when executed on at least one processor, cause the at least one processor to carry out the method according to any of the claims 1 - 10.

**15.** A digital distribution platform server for apps on a User Equipment, UE, wherein said platform comprises a non-volatile memory, being arranged for distribution of an app comprising a computer program product which comprises computer program code arranged for performing the method according to claim 1.
